# EUROPÄISCHE PATENTANMELDUNG

(11) **EP 0 679 617 A1**
(43) Veröffentlichungstag der Anmeldung: **02.11.1995**
(21) Anmeldenummer: 95105769.4
(22) Anmeldetag: 18.04.1995
(51) Int. Cl.: C04B 35/638, C04B 35/632

(54) **Thermoplastische Formmassen, enthaltend mindestens ein sinterfähiges Keramik- oder Metallpulver, thermoplastisches Bindemittel oder ein Bindemittelgemisch und mindestens ein Antioxidans**

(30) Priorität: 29.04.1994 DE 4414973
(71) Anmelder: BAYER AG, 51368 Leverkusen (DE)
(72) Erfinder: Huggins, John Mitchell, Dr., D-51373 Leverkusen (DE)

(57) **Zusammenfassung**

Die vorliegende Erfindung betrifft eine neue thermoplastische Formmasse, enthaltend mindestens ein sinterfähiges Keramik- oder Metallpulver (A) und mindestens ein thermoplastisches Bindemittel oder Bindemittelgemisch (B), wobei das Bindemittel oder Bindemittelgemisch mindestens ein Antioxidans enthält, ein Verfahren zur Herstellung sowie deren Verwendung.

## Beschreibung

Die vorliegende Erfindung betrifft eine neue thermoplastische Formmasse, enthaltend mindestens ein sinterfähiges Keramik- oder Metallpulver (A) und mindestens ein thermoplastisches Bindemittel oder Bindemittelgemisch (B), wobei das Bindemittel oder Bindemittelgemisch mindestens ein Antioxidans (C) enthält, ein Verfahren zur Herstellung sowie deren Verwendung.

Thermoplastische Formmassen finden unter anderem bei Verfahren, wie Spritzgießen, Extrudieren oder Warmpressen, d.h. bei Verfahren in denen ein temperaturabhängiges Fließverhalten notwendig ist, Anwendung.

Aus R.M. German, K.F. Hens uns S.P. Lin Ceramic Bulletin Vol. 70 (1991) 1294-1302 ist bekannt, daß sinterfähige Keramik- oder Metallpulvern zusammen mit thermoplastischen Bindemitteln zu Formmassen gemischt und durch Verfahren wie Spritzgießen, Extrudieren oder Warmpressen zu Formteilen verarbeitet werden können.

Nach der Formgebung wird das Bindemittel aus dem Formteil entfernt. Das teilweise oder vollständig von Bindemittel befreite Formteil wird anschließend zur Verdichtung des Körpers bei Temperaturen von mehr als 800°C gesintert. Die Entfernung des Bindemittels erfolgt in der Regel bei Temperaturen zwischen 200 und 1 000°C entweder in Luft oder in einer inerten Atmosphäre bzw. bei erhöhtem Druck oder im Vakuum.

Dabei wird das Bindemittel verdampft bzw. thermisch und oxidativ zersetzt und in flüchtige Abbauprodukte überführt. Nach dem Stand der Technik muß die Entfernung des Bindemittels mit sorgfältiger Temperaturführung und langsam durchgeführt werden, um Fehler, wie Blasen und Risse, in dem Formteil zu vermeiden.

Eine langsame Entferung des Bindemittels ist jedoch kostenspielig. Zudem sind Anlagen, die eine Entfernung des Bindemittels in einer inerten Atmosphäre bzw. bei erhöhtem Druck oder Vakuum ermöglichen, teuer.

Das Bindemittel kann auch durch Extraktion mit Lösungsmittel oder superkritischen Gasen teilweise oder vollständig entfernt werden. Dieses Verfahren hat jedoch auch Nachteile, in soweit teuere Apparaturen und lange Verweilzeiten notwendig sind. Zudem müssen Bindemittel enthaltende Lösungsmittel entsorgt oder aufgearbeitet werden. Ein Abbau bestimmter Bindemitteln ist in Gegenwart von gasförmigen Katalysatoren möglich. Dieses Verfahren erfordert ebenfalls teuere Anlagen.

Aufgabe der vorliegenden Erfindung war daher die Bereitstellung einer neuen thermoplastischen Formmasse, die die fehlerfreie Entfernung des Bindemittels an der Luft in kurzer Zeit ermöglicht.

Es wurde nun gefunden, daß sinterfähige Keramik- oder Metallpulver und thermoplastische Bindemittel, die organische Antioxidantien enthalten, eine Formmasse bilden, aus der sich das Bindemittel bei erhöhter Temperatur an der Luft in kurzer Zeit entfernen läßt. Überraschenderweise wird das erfindungsgemäß modifizierten Bindemittel schneller entfernt als die Bindemittel, die keine Antioxidantien enthalten. Das Ergebnis ist umso erstaunlicher, als bisher die Oxidation als ein wichtiger Mechanismus des Bindemittelabbaus betrachtet wurde (M.J. Edirisinghe J.R.G. Evans Int. J. High Techn. Ceramics, 2 (1986) 249-278) und Antioxidantien den oxidativen Abbau des Bindemittels hemmen sollten.

Gegenstand der Erfindung ist somit eine thermoplastische Formmasse, enthaltend mindestens ein sinterfähiges Keramik- oder Metallpulver (A) und mindestens ein thermoplastisches Bindemittel oder Bindemittelgemisch (B), wobei das Bindemittel (B) mindestens ein Antioxidans (C) enthält.

Sinterfähige Keramik- oder Metallpulver (A) im Sinne der Erfindung sind alle Pulver aus Metall oder Keramik, einschließlich der Rohstoffe zur Herstellung von Keramik, die zu einem festen Körper gesintert werden können. Das Pulver (A) ist vorzugsweise aus Oxidkeramik oder nicht-oxidischer Keramik bzw. deren Rohstoffen, sowie Hartmetall, Sintermetall, legiertem Stahl oder reinem Metall.

Beispiele von erfindungsgemäß einsetzbarem Oxidkeramik sind Al₂O₃, MgO, ZrO₂, Al₂TiO₅ und Silikatkeramik, wie Porzellan und Steinzeugmischungen, die unter anderem Ton, Feldspat, Knochenasche und Quarz enthalten können. Beispiele für nicht-oxidischer Keramik sind SiC und Si₃N₄. Beispiele für sinterfähige Hartmetalle sind WC bzw. TaC. Ein Beispiel für ein sinterfähiges Metallpulver ist Silizium, das bei hohen Temperaturen mit Stickstoff zu Siliziumnitrid umgesetzt werden kann. Die Pulver können allein oder auch als Gemisch verschiedener Pulver eingesetzt werden.

Die erfindungsgemäße Formmasse kann in einer weiteren Ausführungsform auch ein mit organischen oder organometallischen Dispergatoren beschichtetes Pulver enthalten.

Im allgemeinen werden je nach Keramik- oder Metallpulver unterschiedliche Sinterhilfsmittel zugesetzt, die beim Sintern der Formteile durch Bildung von niedrigschmelzenden Phasen die Verdichtung beschleunigen.

Thermoplastische Bindemittel (B) oder ein Bindemittelgemisch im Sinne der Erfindung sind vorzugsweise Gemische aus thermoplastischen Polymeren und Wachsen auf organischer Basis sowie weiteren Hilfsstoffen. Bevorzugt sind Bindemittel, die im Gemisch eine Erweichungstemperatur zwischen 40 und 200°C, besonders bevorzugt zwischen 50 und 150°C, aufweisen. Thermoplastische Polymere sind beispielsweise Polyethylen, Polypropylen, Polystyrol, Polyacrylate, Polyester und Ethylenvinylacetat-Copolymere. Bevorzugt werden auch Wachse aus mineralischen oder natürlichen Vorkommen, wie Paraffinwachse, Montanwachse, Bienenwachs oder Pflanzenwachse und deren Folgeprodukten. Synthetische Wachse nicht-polymerer Art wie Stearinsäureamid und Stearinsäureethylester sind ebenfalls bevorzugt.

Die erfindungsgemäßen einsetzbaren Hilfsstoffe sind Stoffe, die eine Verbesserung der Verarbeitungseigenschaften oder das Austreiben des Bindemittels bewirken, wie Dispergtoren, Weichmacher oder sublimierbare Feststoffe, Dispergatoren sind beispielsweise Natriumstearat, Stearinsäure oder Polyethersilicone. Als Weichmacher sind aliphatische Ester von Phthalinsäure, Adipinsäure oder Phosphorsäure einsetzbar. Beispiele von sublimierbaren Feststoffen, sind Naphthalin und Anthracen

Antioxidantien (C) im Sinne der Erfindung sind alle bekannten Zusatzstoffe, die die Oxidation von organischen Polymeren mit Luftsauerstoff inhibieren, siehe "Antioxidants" in Kirk-Othmer Enclyolopedia of Chemical Technology, 4. Auflage, Vol. 3, S. 424-447. Zudem müssen die erfindungsgemäßen Antioxidantien eine geringe Flüchtigkeit aufweisen, um im Temperaturbereich oberhalb 200°C wirksam zu sein. Nicht wirksam sind Antioxidantien, die einen Siedepunkt von weniger als 250°C aufweisen. Besonders bevorzugt sind Antioxidantien, die einen Gewichtsverlust nach 1 Stunde bei 250°C von weniger als 50 Gew.-% aufweisen.

Besonders wirksam sind Radikalfänger und Peroxid bzw. Hydroperoxid abbauenden Substanzen. Beispiele von wirksamen Radikalfänger sind sterisch gehinderte Phenole und aromatische Amine. Peroxide werden besonders von zweiwertigen Schwefelverbindungen und dreiwertigen Phosphorverbindungen, wie z.B. Phosphite und Phosphonite, abgebaut.

In der thermoplastischen Formmasse ist das Antioxidans vorzugsweise ein Gemisch aus einem sterisch gehinderten Phenol oder aromatischen Amin und einer zweiwertigen Schwefel- oder einer dreiwertigen Phosphorverbindungen.

Besonders bevorzugt ist das Antioxidans (C) ein Gemisch aus mindestens einem sterisch gehinderten Phenol oder aromatischen Amin und mindestens einer dreiwertigen Phosphorverbindung.

In einer weiteren bevorzugten Ausführungsform der vorliegenden Erfindung kann die thermoplastische Formmasse zusätzlich mindestens ein Siliconharz (D) enthalten. Die Menge an Siliconharz beträgt, bezogen auf Bindemittel, vorzugsweise 1 bis 70 Gew.-%.

Siliconharze (D) im Sinne der Erfindung sind Polyorganosiloxane, die eine mehrfach-verzweigte Struktur aufweisen. Bevorzugt sind thermoplastische Siliconharze bzw. Siliconharzgemische mit einer Erweichungstemperatur zwischen 30 und 200°C, insbesondere zwischen 40 und 130°C. Besonders bevorzugt sind thermoplastische Siliconharze, die eine Keramikausbeute von mindestens 60 Gew.-% aufweisen. Die Keramikausbeute ist dabei definiert als der nach Pyrolyse bis 1 000°C an der Luft verbleibende Rest. Weniger bevorzugt sind Siliconharze, die flüssig sind oder keinen Erweichungspunkt aufweisen.

Die erfindungsgemäße thermoplastische Formmasse enthält neben dem Keramik- oder Metallpulver mindestens soviel Bindemittel und Siliconharz, wie für den Erhalt einer thermoplastisch verarbeitbaren Masse notwendig ist. In der Regel müssen Bindemittel und Siliconharz mindestens das freie Volumen zwischen den Pulverpartikeln im Formteil ausfüllen. Die eingesetzten Mengen sind abhängig von der Dichte, der Kornform und der Korngrößenverteilung des Pulvers. Erfahrungsgemäß entsprechen Bindemittel und Siliconharz 30 bis 50 Vol.-% der Gesamtmischung. Besonders bevorzugt ist eine Formmasse mit mindestens 60 Vol.-% sinterfähigem Pulver.

In der thermoplastischen Formmasse beträgt die Menge an Antioxidans (C), bezogen auf das Bindemittel, vorzugsweise 0,01 bis 5 Gew.-%, besonders bevorzugt 0,1 bis 2 Gew.-%

Gegenstand der vorliegenden Erfindung ist auch ein Verfahren zur Herstellung der erfindungsgemäßen Formmasse, in dem man die Komponenten (A) bis (C) und gegebenenfalls (D) oberhalb der Erweichungstemperatur des Bindemittels miteinander innig vermischt.

In einer weiteren Ausführungsform der vorliegenden Erfindung kann das noch aus der Siliconherstellung verbliebene restliche Lösungsmittel beim Mischen entfernt werden. Zur Verkleinerung der Pulveraggregate und zur Homogenisierung der Mischung ist es vorteilhaft, hohe Scherkräfte beim Mischen anzuwenden. Geeignete Mischagregate sind zum Beispiel Kneter, Extruder oder Walzwerke. Die Formmassen können entweder direkt verwendet werden oder zuerst zu Pulvern oder Granulaten verarbeitet und dann eingesetzt werden.

Die erfindungsgemäße thermoplastische Formmasse wird vorzugsweise zur Herstellung von Formteilen verwendet. Diese sind von hoher Qualität und können in kurzer Zeit und mit hoher Reproduzierbarkeit zu fehlerfreien dichten Körpern gesintert werden.

Die Erfindung wird anhand der folgenden Beispiele weiter erläutert.

### Beispiele

Die folgenden Antioxidantien wurden in den Beispielen eingesetzt:

### Irganox®1010

Ein sterisch gehindertes Phenol der Firma Ciba-Geigy mit der chemischen Bezeichnung Pentaaerthrityl-tetrakis[3-(3,5-di-tert.-butyl-4-hydroxyphenyl)-propionat] und einem Schmelzpunkt von 110 bis 125°C.

### Irgaphos®168

Ein sterisch gehindertes Organophosphit der Firma Ciba-Geigy mit der chemischen Bezeichnung tris-(2,4-tert. Butylphenyl)phosphit und einem Schmelzpunkt von 180 bis 185°C.

### Beispiel 1

In einem Z-Kneter wurden bei 120°C eines Bindemittelgemisches, das 22,95 g Paraffinwachs, 6,0 g Stearinsäureamid, 12,0 g Ethylen-Vinylacetat-Copolymer, 18,0 g eines thermoplastischen Siliconharzes und 1,05 g Irganox®1010 enthält, mit 275 g einer Porzellanrohstoffmischung 10 Minuten zu einer Formmasse geknetet. Anschließend wurde die Masse 10 Minuten bei 130°C auf einem Zweiwalzenstuhl homogenisiert. Die Formmasse war optisch homogen, hellgrau und hatte eine Erweichungstemperatur nach DCS con 60 bis 110°C. Die Formmasse enthält ca. 63,5 Vol.-% Porzellanpulver.

Die Formmasse wurde in einer Spritzgußmaschine zu 4x40x80 mm großen Formteile gespritzt. Beim Spritzgießen betrug die Massetemperatur etwa 165°C, die Formtemperatur 30°C und der Haltedruck 600 bar. Die Formteile waren optisch fehlerfrei.

Die Formteile wurden bei einem Auflieizprogramm von 100°C, 1 h; 250°C, 6 h; 400°C, 1 h; 600°C, 1 h; 905°C, 1,5 h in einem langsamen Luftstrom gebrannt. Die gebrannten Formteile waren weiß, frei von optischen Fehlern und wiesen einen Gewichtsverlust von 19,2 Gew.-% auf. Bei Unterbrechung des Brennprogrammes bei 250°C betrug der Gewichtsverlust der Formteile etwa 5,3 Gew.-%.

### Beispiel 2

Eine Formmasse wurde wie in Beispiel 1 aus einem Bindemittelgemisch, das 22,95 g Paraffinwachs, 6,0 g Stearinsäureamid, 12,0 g Ethylen-Vinylacetat-Copolymer, 18,0 g eines thermoplastischen Siliconharzes und 0,525 g Irganox®1010 sowie 0,525 g Irgaphos®168 enthält und 275 g Porzellanrohstoffmischung hergestellt. Die Formmasse war optisch homogen und hellgrau.

Die Formmasse wurde wie in Beispiel 1 zu 4x40x80 mm großen Formteilen gespritzt und innerhalb von 10,5 h bis 950°C in einem langsamen Luftstrom gebrannt. Die gebrannten Formteile waren weiß und frei von optischen Fehlern. Der Gewichtsverlust betrug 19,15 Gew.-%. Bei Unterbrechung des Brennprogrammes bei 250°C, betrug der Gewichtsverlust der Formteile etwa 5,2 Gew.-%.

### Beispiel 3 (Vergleichsbeispiel)

Eine Formmasse wurde wie in Beispiel 1 aus 60 g des gleichen Bindemittels, die aber kein Antioxidans enthielt, und 275 g Porzellanrohstoffmischung hergestellt. Die Formmassen wurden wie in Beispiel 1 zu 4x40x30 mm großen Formteilen gespritzt. Die gespritzten Formteile waren optisch fehlerfrei.

Anschließend wurden die Formteile innerhalb von 10,5 h bis 950°C in einem Luftstrom gebrannt. Die gebrannten Formteile wiesen mehrere Fehler, wie Blasen und Risse, auf. Der Gewichtsverlust betrug 19,1 Gew.-%. Bei Unterbrechung des Brennprogramms bei 250°C betrug der Gewichtsverlust der Formteile etwa 4,8 Gew.-%. Die Formteile konnten nur bei wesentlich langsameren Brennprogrammen fehlerfrei gebrannt werden.

## Patentansprüche

1. Thermoplastische Formmasse enthaltend mindestens ein sinterfähiges Keramik- oder Metallpulver (A) und mindestens ein thermoplastisches Bindemittel oder Bindemittelgemisch (B), dadurch gekennzeichnet, daß das Bindemittel oder Bindemittelgemisch (B) mindestens ein Antioxidans (C) enthält.

2. Thermoplastische Formmasse nach Anspruch 1, dadurch gekennzeichnet, daß die thermoplastische Formmasse zusätzlich mindestens ein Siliconharz (D) enthält.

3. Thermoplastische Formmasse nach einem der Ansprüche 1 oder 2, dadurch gekennzeichnet, daß das Antioxidans (C) ein sterisch gehindertes Phenol oder aromatisches Amin oder eine zweiwertige Schwefelverbindung oder mindestens eine dreiwertige Phosphorverbindung ist.

4. Thermoplastische Formmasse nach einem der Ansprüche 1 bis 3, dadurch gekennzeichnet, daß das Antioxidans (C) ein Gemisch aus mindestens einem sterisch gehinderten Phenol oder aromatischen Amin und mindestens einer dreiwertigen Phosphorverbindung ist.

5. Thermoplastische Formmasse nach einem der Ansprüche 1 bis 4, dadurch gekennzeichnet, daß die Menge des Antioxidans (C) bezogen auf das Bindemittel, 0,01 bis 5 Gew.-% beträgt.

6. Verfahren zur Herstellung einer thermoplastischen Formmasse nach einem der Ansprüche 1 bis 5, dadurch gekennzeichnet, daß man die Komponenten (A) bis (C) und gegebenenfalls (D) oberhalb der Erweichungstemperatur des Bindemittels (B) miteinander innig mischt.

7. Verwendung einer thermoplastischen Formmasse nach einem der Ansprüche 1 bis 5 zur Herstellung von Formteilen.
